# EUROPEAN PATENT APPLICATION

(11) **EP 4 692 600 A1**
(43) Date of publication of application: **11.02.2026**
(21) Application number: 24778680.9
(22) Date of filing: 05.02.2024
(51) Int. Cl.: F16H 57/04, H02K 5/173, H02K 7/116

(54) **VEHICLE DRIVE DEVICE**

(30) Priority: 30.03.2023 JP 2023056790
(71) Applicant: AISIN CORPORATION, Kariya-shi, Aichi 448-8650 (JP)
(72) Inventor: FUJIWARA, Kei, Kariya-shi, Aichi 448-8650 (JP); YAMANAKA, Sho, Kariya-shi, Aichi 448-8650 (JP); UENO, Akihiro, Kariya-shi, Aichi 448-8650 (JP); FUKUMA, Takeshi, Kariya-shi, Aichi 448-8650 (JP)
(74) Representative: Winter, Brandl - Partnerschaft mbB
(86) International application number: PCT/JP2024/003641
(87) International publication number: WO 2024/202535

(57) **Abstract**

Disclosed is a vehicle drive device including: a power transmission mechanism; a shaft bearing that rotatably supports a rotary shaft member; a case that houses the power transmission mechanism in a housing chamber in which oil flows, the case including a shaft bearing support portion that fixedly supports the shaft bearing; and an oil passage structure, at least a part of which is formed in the case. The shaft bearing support portion includes a first wall portion formed about an axis and radially facing the shaft bearing, and a second wall portion formed about the axis and axially facing an outer periphery of the shaft bearing from an axially first side. The oil passage structure includes a first groove portion formed in the first wall portion in a manner recessed radially outward. The first groove portion includes a first guide surface facing obliquely downward. The first guide surface extends axially and downward from an end of the first wall portion on an axially second side toward an end of the first wall portion on the axially first side.

## Description

### TECHNICAL FIELD

The present disclosure relates to a vehicle drive device.

### BACKGROUND ART

A technique is known in which a groove portion is provided on an inner peripheral surface of a shaft bearing fitting hole to which a rolling shaft bearing is fitted, the groove portion providing communication between a housing chamber in a case and the internal space of the shaft bearing fitting hole.

### CITATIONS LIST

### PATENT LITERATURE

Patent Literature 1: JP 2017-141848 A

### SUMMARY OF INVENTION

### TECHNICAL PROBLEMS

However, in the conventional technique described above, a groove portion having a constant form is formed over the entire axial length of a peripheral wall portion that forms the shaft bearing fitting hole, and hence there is a possibility that the desired flow of oil is not achieved when a vehicle orientation changes relative to the axial direction.

Therefore, in one aspect, the present disclosure reduces or eliminates a shortage in the amount of oil supply to the shaft bearing even when the vehicle orientation changes relative to the axial direction.

### SOLUTIONS TO PROBLEMS

In one aspect, there is provided a vehicle drive device including: a power transmission mechanism including a rotary shaft member that enables transmission of power from a power source to a wheel; a shaft bearing that rotatably supports the rotary shaft member; a case that houses the power transmission mechanism in a housing chamber in which oil flows, the case including a shaft bearing support portion that fixedly supports the shaft bearing; and an oil passage structure, at least a part of which is formed in the case. The shaft bearing support portion includes a first wall portion formed about an axis and radially facing the shaft bearing, and a second wall portion formed about the axis and axially facing an outer periphery of the shaft bearing from an axially first side. The oil passage structure includes a first groove portion formed in the first wall portion in a manner recessed radially outward. The first groove portion includes a first guide surface facing obliquely downward. The first guide surface extends axially and downward from an end of the first wall portion on the axially second side toward an end of the first wall portion on the axially first side.

### ADVANTAGEOUS EFFECTS OF INVENTION

In one aspect, according to the present disclosure, it is possible to reduce or eliminate a shortage in the amount of oil supply to the shaft bearing even when the vehicle orientation changes relative to the axial direction.

### BRIEF DESCRIPTION OF DRAWINGS

FIG. 1 is a schematic top view showing an installation state of a vehicle drive device in a vehicle.
FIG. 2 is a schematic cross-sectional view of a main part of the vehicle drive device.
FIG. 2A is a skeleton diagram showing the vehicle drive device.
FIG. 2B is a diagram schematically showing the flow of oil in the vehicle drive device according to a present embodiment.
FIG. 3 is a plan view schematically showing a part of a motor case as viewed from an axially second side A2.
FIG. 4 is a perspective view schematically showing a part of the motor case as viewed from the axially second side A2.
FIG. 5 is an enlarged explanatory view of a part of FIG. 4.
FIG. 6 is a cross-sectional view showing a state of an oil passage structure in an inclined state of the vehicle.

### DESCRIPTION OF EMBODIMENTS

Hereinafter, each embodiment will be described in detail with reference to the accompanying drawings. Note that the dimensional ratios in the drawings are merely examples, and the dimensional ratios are not limited thereto, and the shapes and the like in the drawings may be partially exaggerated for convenience of description. In the drawings, only some of a plurality of sections with the same attribute may be denoted by reference numerals for the sake of clarity.

The directions of the respective members in the following description represent directions in a state where those members are assembled to a vehicle drive device 100. In addition, terms related to a dimension, placement direction, placement position, and the like for each member are concepts that include states having differences due to errors (errors within an allowable in manufacturing).

In the present specification, the term "drive-coupled" refers to a state in which two rotary elements are coupled to each other to transmit a driving force (synonymous with torque), and includes a state in which the two rotary elements are coupled to each other so as to rotate integrally, or a state in which the two rotary elements are coupled to each other to transmit a driving force via one or two or more transmission members. Such transmission members include various members (e.g., shaft, gear mechanism, belt, chain, etc.) that transmit rotation at the same speed or at variable speeds. Note that the transmission members may include an engagement device (e.g., friction engagement device, meshing engagement device, etc.) that selectively transmits rotation and a driving force.

In the present specification, the "rotary electric machine" is used as a concept that includes any of a motor (electric motor), a generator (electric generator), and a motor-generator that performs both functions of the motor and the generator as necessary. In the present specification, with regard to the placement of two members, "overlapping as viewed in a specific direction" means that when an imaginary straight line parallel to the viewing direction is moved in each direction orthogonal to the imaginary straight line, a region where the imaginary straight line intersects both of the two members at least partially exists. Further, in the present specification, with regard to the placement of two members, "placement regions in a specific direction overlap" means that a placement region of one member in the specific direction includes at least a part of a placement region of the other member in the specific direction.

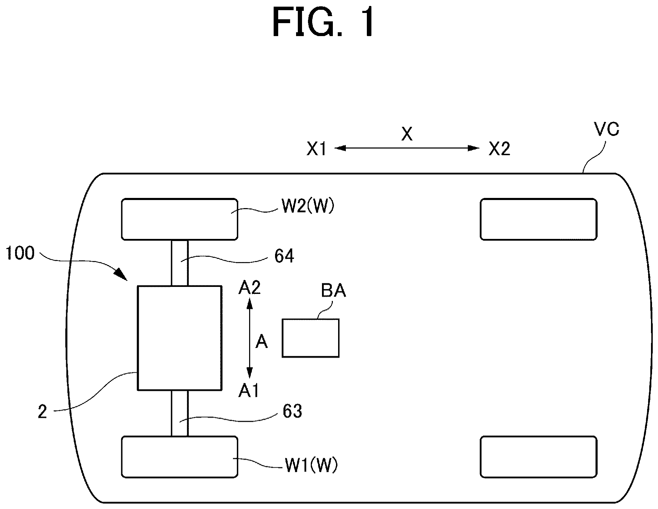

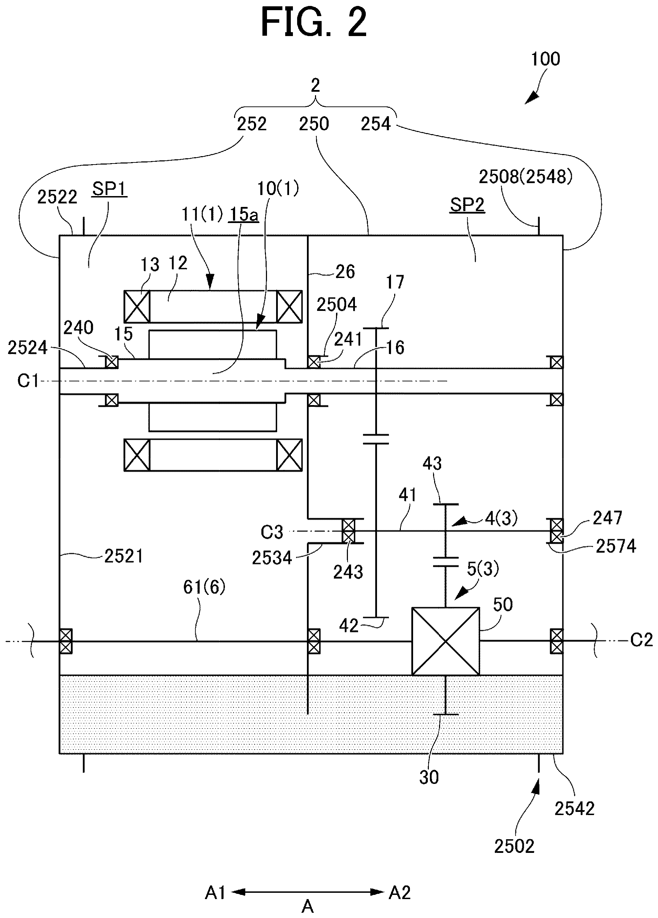

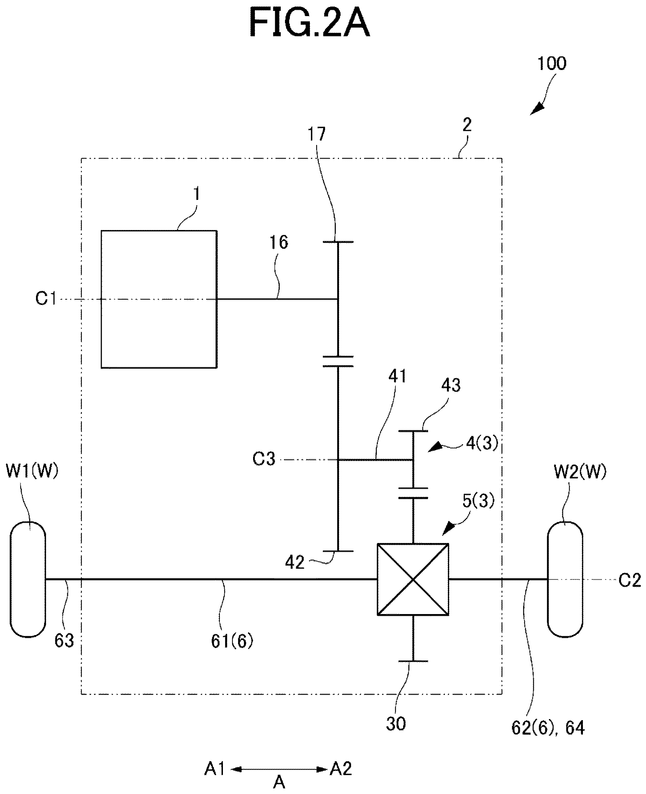

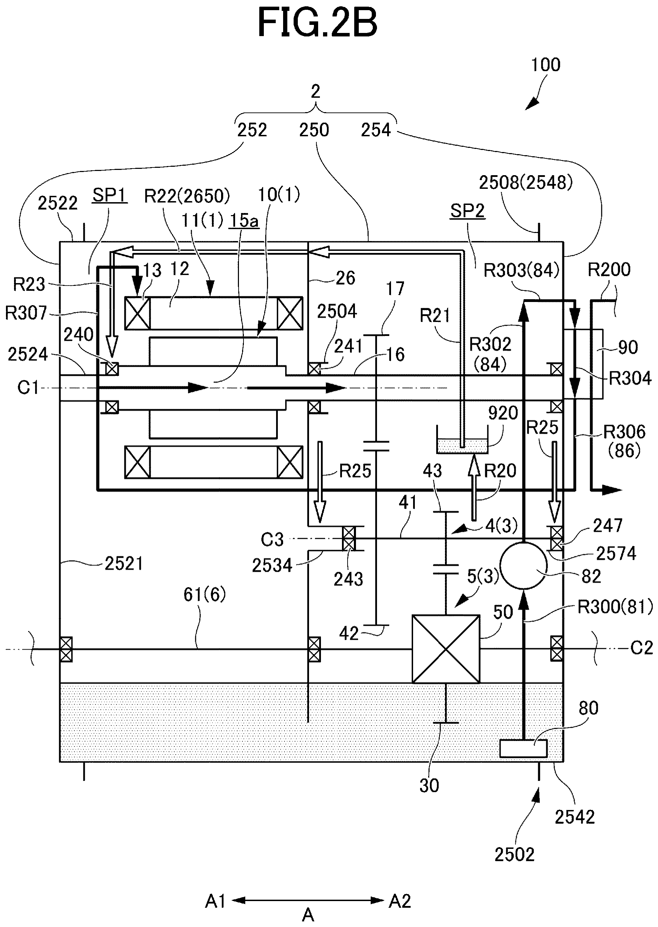

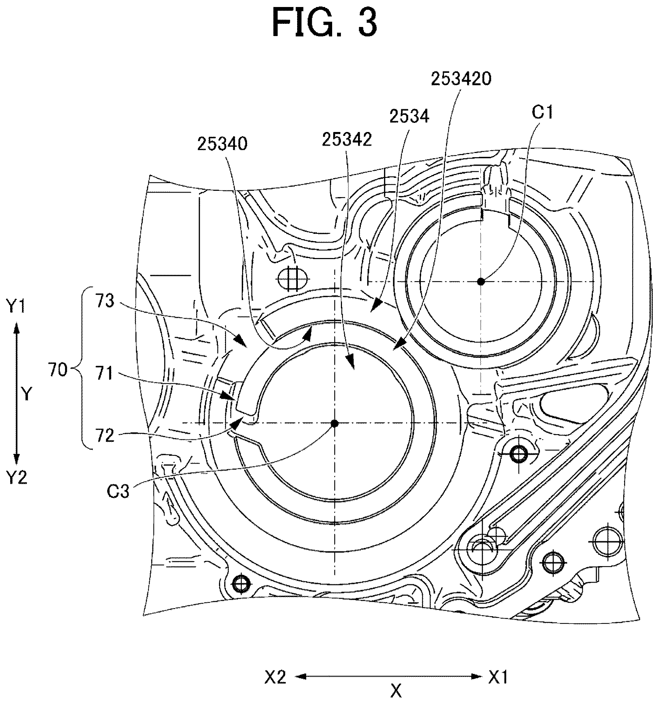

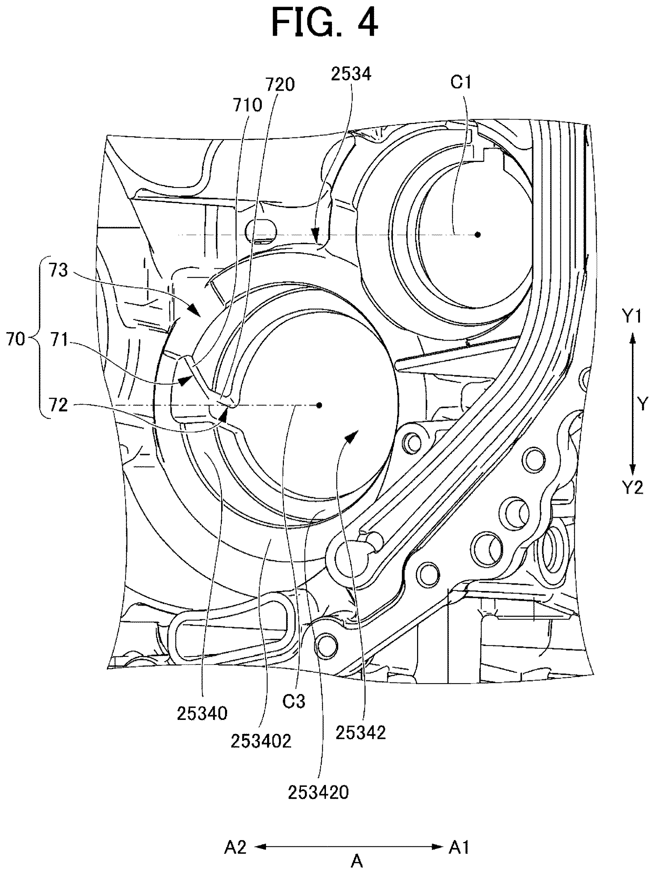

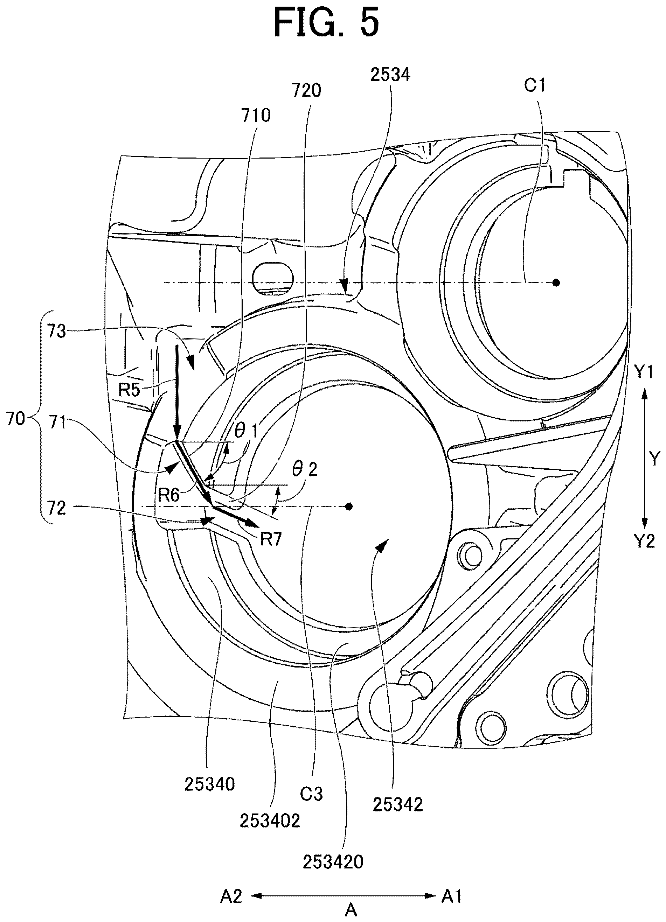

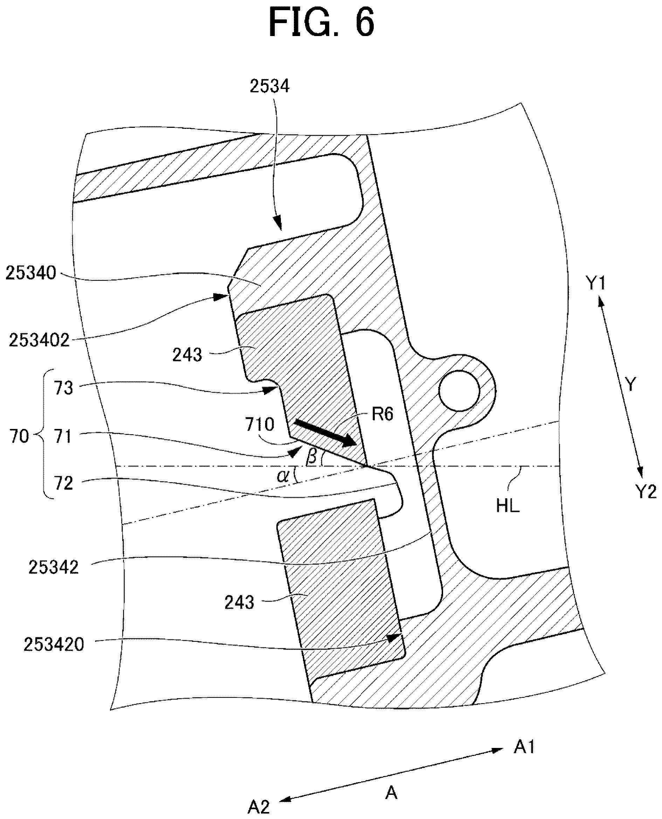

FIG. 1 is a schematic top view showing an installation state of a vehicle drive device 100 in a vehicle VC. FIG. 2 is a cross-sectional view of a main part of the vehicle drive device 100. FIG. 2A is a skeleton diagram showing the vehicle drive device 100. FIG. 2B is a diagram schematically showing the flow of oil in the vehicle drive device 100 according to a present embodiment. In FIG. 2B, oil accumulated in a lower portion of a case 2 (a lower portion of a housing chamber SP) is schematically shown by a hatched region, and the flow of oil is schematically shown by an arrow R20 and the like. FIG. 3 is a plan view schematically showing a part of a motor case 250 as viewed from an axially second side A2. FIG. 4 is a perspective view schematically showing a part of the motor case 250 as viewed from the axially second side A2. FIG. 5 is a partially enlarged explanatory view of FIG. 4. In FIGS. 4 and 5 and the like, a bearing 243 and the like are not shown. In FIG. 5, the flow of oil is schematically shown by arrows R5, R6, and the like. FIG. 6 is a cross-sectional view showing a state of an oil passage structure in the inclined state of the vehicle. FIG. 6 is a cross-sectional view of the motor case 250 taken along a plane including both an axial direction A and a second direction Y.

In FIG. 3, a first direction X and the second direction Y are defined. The first direction X, the second direction Y, and the axial direction A are three axial directions orthogonal to each other, and the second direction Y has a component in the vertical direction. In this case, the second direction Y may be parallel to the gravity direction (perpendicular direction) or may be inclined in the installed state of the vehicle drive device 100 in the vehicle VC. For example, the vehicle drive device 100 may be installed in the vehicle VC in a direction in which a second direction first side Y1 is the upper side and a second direction second side Y2 is the lower side. The vehicle drive device 100 may be installed in the vehicle VC in a direction in which a first direction first side X1 is the front side (the front side in the vehicle front-rear direction) and a first direction second side X2 is the rear side (the rear side in the vehicle front-rear direction). As shown in FIG. 1, the vehicle drive device 100 may be installed on the front side of the central portion in the vehicle front-rear direction of the vehicle VC, or may be installed on the rear side of the central portion in the vehicle front-rear direction of the vehicle VC. When the vehicle drive device 100 is installed on the rear side of the central portion in the vehicle front-rear direction of the vehicle VC as described above, a pair of wheels W driven by the vehicle drive device 100 may be, for example, a pair of left and right rear wheels.

When the vehicle VC includes a pair of left and right front wheels and a pair of left and right rear wheels, one of the pair of left and right front wheels and the pair of left and right rear wheels that is not driven by the vehicle drive device 100 (in the example shown in FIG. 1, a pair of left and right rear wheels) may be driven by a drive device other than the vehicle drive device 100. The drive device other than the vehicle drive device 100 is, for example, a drive device configured to transmit output torque of an internal combustion engine to a pair of wheels to be driven, a drive device configured to transmit output torque of a rotary electric machine (a rotary electric machine different from the rotary electric machine 1 included in the vehicle drive device 100) to a pair of wheels to be driven, or a drive device configured to transmit output torque of both the internal combustion engine and the rotary electric machine (a rotary electric machine different from the rotary electric machine 1 included in the vehicle drive device 100) to a pair of wheels to be driven. The drive device other than the vehicle drive device 100 may be a drive device having the same configuration as the vehicle drive device 100.

In the present embodiment, as schematically shown in FIGS. 1 and 2A, the vehicle drive device 100 includes the rotary electric machine 1, a pair of output members 6 that is drive-coupled to the pair of wheels W (see FIG. 1), and a transmission mechanism 3 that transmits a driving force between the rotary electric machine 1 and the pair of output members 6. The vehicle drive device 100 further includes the case 2 that houses the rotary electric machine 1. The case 2 also houses the pair of output members 6 and the transmission mechanism 3.

A first output member 61, which is one of the pair of output members 6, is drive-coupled to a first wheel W1, which is one of the pair of wheels W, and a second output member 62, which is the other of the pair of output members 6, is drive-coupled to a second wheel W2, which is the other of the pair of wheels W. As shown in FIG. 1, the vehicle VC in which the vehicle drive device 100 is installed includes a first drive shaft 63 that rotates integrally with the first wheel W1 and a second drive shaft 64 that rotates integrally with the second wheel W2. The first drive shaft 63 is coupled to the first wheel W1 via, for example, a constant velocity joint, and the second drive shaft 64 is coupled to the second wheel W2 via, for example, a constant velocity joint. Then, the first output member 61 is coupled to the first drive shaft 63 so as to rotate integrally with the first drive shaft 63, and the second output member 62 is coupled to the second drive shaft 64 so as to rotate integrally with the second drive shaft 64.

The vehicle drive device 100 transmits the output torque of the rotary electric machine 1 to the pair of wheels W via the pair of output members 6 to cause the vehicle VC in which the vehicle drive device 100 is installed to travel. That is, the rotary electric machine 1 is a driving force source for the pair of wheels W. The pair of wheels W is a pair of left and right wheels (e.g., a pair of left and right front wheels or a pair of left and right rear wheels) in the vehicle VC. The rotary electric machine 1 may be, for example, an alternating-current (AC) rotary electric machine that is driven by three-phase AC. The rotary electric machine 1 is electrically connected to a battery BA (including a power storage device such as a capacitor) via an inverter device (not shown) that performs power conversion between direct-current (DC) power and AC power, and performs powering by receiving power supply from the battery BA, or supplies power generated by the inertial force or the like of the vehicle VC to the power storage device to store the power.

As shown in FIG. 2, the rotary electric machine 1 and the pair of output members 6 are disposed separately on two axes (specifically, a first axis C1 and a second axis C2) parallel to each other. Specifically, the rotary electric machine 1 is disposed on the first axis C1, and the pair of output members 6 is disposed on the second axis C2 different from the first axis C1. The first axis C1 and the second axis C2 are axes (virtual axes) arranged parallel to each other. The transmission mechanism 3 includes an output gear (ring gear) 30, which is drive-coupled to at least one of the pair of output members 6, coaxially with the pair of output members 6 (i.e., on the second axis C2).

As shown in FIG. 1, the vehicle drive device 100 is installed in the vehicle VC in a direction in which the axial direction A is along the vehicle left-right direction. The axial direction A is a direction parallel to the first axis C1 and the second axis C2, in other words, an axial direction common between the first axis C1 and the second axis C2. That is, the axial direction A is a direction in which the rotary axis of the rotary electric machine 1 extends, and is also a direction in which the rotary axis of the pair of output members 6 extends. Here, one side in the axial direction A is defined as an axially first side A1, and the other side in the axial direction A (a side opposite to the axially first side A1 in the axial direction A) is defined as an axially second side A2. The axially first side A1 is a side on which the rotary electric machine 1 is disposed relative to the transmission mechanism 3 in the axial direction A. As shown in FIG. 2, the first output member 61 is the output member 6 disposed on the axially first side A1 out of the pair of output members 6, and the second output member 62 is the output member 6 disposed on the axially second side A2 out of the pair of output members 6.

As shown in FIG. 1, the vehicle drive device 100 may be installed in the vehicle VC in a direction in which the axially first side A1 is the vehicle left side and the axially second side A2 is the vehicle right side. In this case, the first wheel W1 to which the first output member 61 is drive-coupled is a left wheel, and the second wheel W2 to which the second output member 62 is drive-coupled is a right wheel. In FIG. 1, it is assumed that the vehicle drive device 100 is a front-wheel-drive type drive device that drives a pair of left and right front wheels. Therefore, in the example shown in FIG. 1, the first wheel W1 is a left front wheel, and the second wheel W2 is a right front wheel.

As shown in FIG. 2, the rotary electric machine 1 includes a rotor 10 and a stator 11. The stator 11 is fixed to the case 2, and the rotor 10 is supported by the case 2 so as to be rotatable relative to the stator 11. The rotary electric machine 1 may be an inner rotor type rotary electric machine, and in this case, the rotor 10 may be disposed on the inner side in the radial direction relative to the stator 11 so as to overlap the stator 11 as viewed in the radial direction along the radial direction. Here, the radial direction is a radial direction with reference to the first axis C1, in other words, a radial direction with reference to the rotary axis of the rotary electric machine 1.

The stator 11 includes a stator core 12 and a coil end portion 13 protruding from the stator core 12 in the axial direction A. A coil is wound around the stator core 12, and a portion of the coil protruding from the stator core 12 in the axial direction A forms the coil end portion 13. The coil end portions 13 are formed on both sides in the axial direction A relative to the stator core 12.

The transmission mechanism 3 includes a counter gear mechanism 4 in a power transmission path between the rotary electric machine 1 and an output gear 30. In a modification, a reduction mechanism using planetary gears, or the like, may be used instead of the counter gear mechanism 4. In this case, instead of the three-axis configuration, a two-axis configuration in which a third axis C3 is eliminated may be implemented.

In the present embodiment, the counter gear mechanism 4 is disposed on an axis offset from an input member 16, which is coaxial with the rotary electric machine 1 (i.e., the third axis C3). Note that the input member 16 is coupled to the rotor 10 so as to rotate integrally with the rotor 10. In the example shown in FIG. 2, the vehicle drive device 100 includes a rotor shaft 15 to which the rotor 10 is fixed, and the input member 16 is coupled to the rotor shaft 15 so as to rotate integrally with the rotor shaft 15. Specifically, a portion of the input member 16 on the axially first side A1 may be coupled (here, spline-coupled) to a portion of the rotor shaft 15 on the axially second side A2. Unlike such a configuration, the rotor shaft 15 of the vehicle drive device 100 can be formed integrally with the input member 16 as a single piece. Note that the rotor shaft 15 has a hollow form with a shaft-center oil passage 15a, but may be solid.

The counter gear mechanism 4 includes a counter shaft 41, a first counter gear 42, and a second counter gear 43.

The counter shaft 41 is a rotary shaft member that rotates about the third axis C3. The third axis C3 extends parallel to the first axis C1. The first counter gear 42 is an input element of the counter gear mechanism 4. The first counter gear 42 meshes with an input gear 17 of the input member 16. The first counter gear 42 is coupled to the counter shaft 41 so as to rotate integrally with the counter shaft 41.

The second counter gear 43 is an output element of the counter gear mechanism 4. In the present embodiment, as an example, the second counter gear 43 is formed to have a smaller diameter than the first counter gear 42. The second counter gear 43 is provided on the counter shaft 41 so as to rotate integrally with the counter shaft 41.

A differential gear mechanism 5 is disposed on the second axis C2 as the rotary axis. The differential gear mechanism 5 distributes the driving force transmitted from the rotary electric machine 1 side to the pair of output members 6. The differential gear mechanism 5 may be disposed coaxially with the pair of output members 6 (i.e., on the second axis C2). The differential gear mechanism 5 distributes the driving force transmitted from the rotary electric machine 1 side to the output gear 30 to the pair of output members 6. That is, the output gear 30 is drive-coupled to both of the pair of output members 6 via the differential gear mechanism 5. Note that the differential gear mechanism 5 may be a bevel-gear type differential gear mechanism, and the output gear 30 may be coupled to a differential case portion 50 included in the differential gear mechanism 5 so as to rotate integrally with the differential case portion 50.

Here, the configuration of the case 2 will be further described with reference to FIG. 2.

The case 2 may be formed of, for example, aluminum. The case 2 can be formed by casting or the like. The case 2 includes the motor case 250, a cover member 252, and a gear case member 254.

The motor case 250 forms a motor housing chamber SP1 that houses the rotary electric machine 1. Note that the motor housing chamber SP1 may be an oil-tight space containing oil for cooling and/or lubricating the rotary electric machine 1 (and/or the transmission mechanism 3). The motor case 250 has a form including a peripheral wall portion that surrounds the radial outside of the rotary electric machine 1. The motor case 250 may be implemented by coupling a plurality of members.

In the example shown in FIG. 2, the motor case 250 includes a partition wall portion 26 that partitions the motor housing chamber SP1 and a gear housing chamber SP2 in the axial direction A. The partition wall portion 26 faces a bottom portion 2521 (described later) of the cover member 252 in the axial direction A.

On the axially second side A2 of the partition wall portion 26, a coupling portion 2502 with the gear case member 254, a bearing support portion 2504 that supports a bearing 241, and the like are formed. Further, on the axially second side A2 of the partition wall portion 26, a bearing support portion 2534 that supports a bearing 243 is formed. Note that the bearing support portion 2534 is formed concentrically about the third axis C3. As shown in FIG. 2, the bearing 243 is provided on the radially outer side at the end of the counter shaft 41 on the axially first side A1. Specifically, in the bearing 243, the radially outer side of an outer race is supported by the bearing support portion 2534, and the radially inner side of an inner race is supported by the outer peripheral surface of the counter shaft 41.

The cover member 252 is coupled to the axially first side A1 of the motor case 250. The cover member 252 is in the form of a cover that covers the axially first side Al in the motor housing chamber SP1. Here, the cover member 252 may cover the opening on the axially first side A1 of the motor case 250 in such a manner as to close the opening completely or substantially completely. Note that a part of the axially first side A1 of the motor housing chamber SP1 may be formed by the cover member 252.

The cover member 252 is provided with a bearing 240 that rotatably supports the rotor 10. That is, the cover member 252 includes a bearing support portion 2524 that supports the bearing 240.

As shown in FIG. 2, the bearing 240 is provided on the radially inner side at the end of the rotor shaft 15 on the axially first side A1. Specifically, in the bearing 240, the radially outer side of an outer race is supported by the inner peripheral surface of the rotor shaft 15, and the radially inner side of an inner race is supported by the cover member 252. As shown in FIG. 2, the bearing 241 is provided on the radially outer side at the end of the rotor shaft 15 on the axially second side A2. Specifically, in the bearing 241, the radially outer side of an outer race is supported by the partition wall portion 26, and the radially inner side of an inner race is supported by the outer peripheral surface of the rotor shaft 15. As schematically shown in FIG. 2B, the bearing 240 may be supplied with oil by a natural lubrication method. In FIG. 2B, reference signs R21, R22, R23, and 2650 each represent the flow of oil that leads the oil to the bearing 240 and the oil passage thereof.

In the example shown in FIG. 2, the cover member 252 includes the circular bottom portion 2521 centered on the first axis C1 and a peripheral wall portion 2522 protruding from the outer peripheral edge of the bottom portion 2521 toward the axially second side A2, and the end surface of the peripheral wall portion 2522 on the axially second side A2 is coupled to the motor case 250. A cylindrical bearing support portion 2524 protruding to the axially second side A2 is formed at a central portion (a portion centered on the first axis C1) of the bottom portion 2521 on the axially second side A2.

The gear case member 254 forms a gear housing chamber SP2 that houses the transmission mechanism 3. Note that the gear housing chamber SP2 may be an oil-tight space communicating with the motor housing chamber SP1. The gear case member 254 is coupled to the axially second side A2 of the motor case 250. In the present embodiment, the gear case member 254 is coupled to the motor case 250 in such a manner that at the coupling portion 2502, a mating surface 2548 comes into contact with a corresponding mating surface 2508 of the motor case 250 in the axial direction A. The gear case member 254 is in the form of a cover that covers the axially second side A2 in the gear housing chamber SP2 in a manner including the peripheral wall portion 2542 that surrounds the radially outer side of the transmission mechanism 3. The gear case member 254 may be implemented by coupling a plurality of members. Note that a part of the axially first side A1 of the gear housing chamber SP2 may be formed by the motor case 250.

The gear case member 254 is provided with a bearing support portion 2574 that rotatably supports the counter shaft 41 via a bearing 247 and other similar bearing support portions.

Next, an oil passage structure in the present embodiment will be described with reference to FIG. 2B and FIG. 3 and subsequent drawings. In the following description, when the motor housing chamber SP1 and the gear housing chamber SP2 described above are not particularly distinguished, these chambers are also simply referred to as a housing chamber SP.

In the present embodiment, oil is circulated in the vehicle drive device 100 not only by a so-called forced lubrication method using an oil pump (mechanical or electric oil pump 82), but by a combination with a lubrication method (natural lubrication method) in which oil is scraped up by rotation of a gear for lubrication. However, in a modification, only the forced lubrication system may be implemented.

Specifically, in the present embodiment, the oil accumulated in the lower portion in the housing chamber SP is scraped up by the rotation of the output gear 30 (so-called differential ring) of the differential gear mechanism 5 (see an arrow R20 in FIG. 2B) and supplied to various objects to be lubricated. Note that the oil in the housing chamber SP may be scraped up by a rotating body (e.g., another gear or a fin) other than the output gear 30.

In the present embodiment, a catch tank 920 may be provided in the gear housing chamber SP2 as schematically shown in FIG. 2B. The oil from the catch tank 920 may be supplied to various objects to be cooled/lubricated (see an arrow R21 and the like in FIG. 2B). For example, the oil in the gear housing chamber SP2 is pumped up by the mechanical or electric oil pump 82 via a strainer 80 and an oil passage 81 (arrow R300) and cooled via an oil cooler 90 that may be provided in the gear case member 254 (arrows R302, R303, R304, etc.). In FIG. 2B, reference signs 84 and 86 schematically represent oil passages to the oil cooler 90, and an arrow R200 represents a flow of cooling water. The oil from the mechanical or electric oil pump 82 may be supplied to the shaft-center oil passage 15a of the rotor shaft 15 and the coil end portion 13 via the oil passage 86 (see arrows R306, R307).

In the present embodiment, in the partition wall portion 26, an oil passage structure 70 related to the supply of oil to the bearing 243 is formed in the bearing support portion 2534 and the periphery thereof. In the gear case member 254, an oil passage structure (not shown) related to the supply of oil to the bearing 247 is formed in the bearing support portion 2574 and the periphery thereof. The oil passage structure related to the supply of oil to the bearing 247 may be substantially similar to the oil passage structure 70 described below, and a detailed description thereof is omitted.

The oil passage structure 70 includes a first groove portion 71, a second groove portion 72, and a third groove portion 73. In the following description of the oil passage structure 70, it is assumed that the radial direction and the circumferential direction are directions with reference to the third axis C3.

The first groove portion 71 is formed in a peripheral wall portion 25340 of the bearing support portion 2534 in a manner recessed radially outward. Note that the peripheral wall portion 25340 of the bearing support portion 2534 is a section that extends around the third axis C3 and in the axial direction A (protrudes from the peripheral portion on the radially outer side thereof) and faces the bearing 243 in the radial direction. For example, the peripheral wall portion 25340 may come into contact with the outer peripheral surface of the outer race of the bearing 243 in the radial direction from the radially outer side.

The first groove portion 71 includes a first guide surface 710 facing obliquely downward (second direction second side Y2). The first guide surface 710 is formed on the side surface of the first groove portion 71 as viewed in the depth direction of the recessed shape of the first groove portion 71. Note that "facing obliquely downward" is a concept including a situation in which the normal direction of the first guide surface 710 does not coincide with the perpendicular direction, but the normal direction of the first guide surface 710 has a component in the perpendicular direction. The same applies to a second guide surface 720 to be described later.

The first guide surface 710 of the first groove portion 71 extends in the axial direction A and downward from the end on the axially second side A2 toward the end on the axially first side A1, in the peripheral wall portion 25340. Note that the first guide surface 710 does not need to be a flat surface as a whole, and may include a step or a curved surface. The first guide surface 710 has a function of supplying oil to the second guide surface 720 (described later) when the vehicle is inclined relative to the left-right direction.

In the present embodiment, as shown in FIG. 5, the first guide surface 710 of the first groove portion 71 extends in a direction inclined by a first angle θ1 relative to the horizontal plane. The magnitude of the first angle θ1 is significantly greater than 0. The vehicle drive device 100 is inclined in the vehicle left-right direction due to a change in the orientation of the vehicle in the vehicle left-right direction. The first angle θ1 may be set in accordance with a possible range of inclination angles when the vehicle drive device 100 is inclined.

In the example shown in FIG. 6, the vehicle drive device 100 and the case 2 are inclined in the axial direction A by an angle α (> 0) relative to a horizontal plane HL in such a manner that the axially second side A2 is located below the axially first side A1. In this case, when the first angle θ1 of the first guide surface 710 is significantly greater than the angle α (e.g., when θ1 = α + β, and β is significantly greater than 0), the angle β of the first guide surface 710 relative to the horizontal plane HL still has a value significantly greater than 0. As a result, the oil can be guided to the second groove portion 72 via the first guide surface 710 even when the vehicle is inclined in the left-right direction (see an arrow R6 in FIG. 6). Therefore, in this case, of the oil that has reached the end of the first groove portion 71 on the axially second side A2, the oil flowing to the axially first side A1 along the first guide surface 710 (see an arrow R6 in FIG. 5), that is, the oil flowing to the back surface side of the bearing 243, can be efficiently increased. In the case of inclination in a direction opposite to that in FIG. 6, in the left-right direction, the inclination relative to the horizontal plane HL (the inclination of the first guide surface 710) increases for the oil passage structure 70 on the bearing 243 side, and the oil is supplied to the back surface side of the bearing 243 without any problem. In this case, an oil passage structure corresponding to the oil passage structure 70 on the bearing support portion 2574 side functions in the same manner, and the oil flowing to the back surface side of the bearing 247 can be efficiently increased.

Here, assuming that the maximum value of the possible range of inclination angles (i.e., the maximum value of the angle α) when the vehicle drive device 100 is inclined in the left-right direction is θMax (not shown), the first angle θ1 may be set to a value equal to or greater than θMax. In this case, the possibility of ensuring the oil flowing to the axially first side A1 along the first guide surface 710 can be increased in any vehicle orientation.

In the present embodiment, as shown in FIGS. 4 and 5, the first groove portion 71 has a form in which the groove width (the distance between the first guide surface 710 and a surface facing the first guide surface) gradually decreases from the end on the axially second side A2 toward the end on the axially first side A1, from the viewpoint of manufacturability. In this case, the side surface of the first groove portion 71 on the other side facing the first guide surface 710 may be inclined in the same direction as the first guide surface 710, or the opposite direction, at an angle significantly smaller than the first angle θ1.

The second groove portion 72 is formed in an outer periphery 253420 of a bottom wall portion 25342 of the bearing support portion 2534 in a manner recessed to the axially first side A1. Note that the outer periphery 253420 of the bottom wall portion 25342 of the bearing support portion 2534 is a section extending around the third axis C3 and in the axial direction A and facing the bearing 243 in the axial direction A. For example, the outer periphery 253420 of the bottom wall portion 25342 of the bearing support portion 2534 may come into contact with the end surface of the outer race of the bearing 243 on the axially first side A1 from the axially first side A1 in the axial direction A.

The second groove portion 72 includes a second guide surface 720 facing obliquely downward (second direction second side Y2). The second guide surface 720 is formed on the side surface of the second groove portion 72 as viewed in the depth direction of the recessed shape of the second groove portion 72.

The second guide surface 720 of the second groove portion 72 extends radially and downward from the end on the radially outer side toward the end on the radially inner side, in the outer periphery 253420. Note that the second guide surface 720 does not need to be a flat surface as a whole, and may include a step or a curved surface. The second guide surface 720 has a function of supplying oil to the bottom wall portion 25342 when the vehicle is inclined relative to the front-rear direction.

In the present embodiment, as shown in FIG. 5, the second guide surface 720 of the second groove portion 72 extends in a direction inclined at a second angle θ2 relative to the horizontal plane. The magnitude of the second angle θ2 is significantly greater than 0. The vehicle drive device 100 is inclined in the vehicle front-rear direction due to a change in the orientation of the vehicle in the vehicle front-rear direction. The second angle θ2 may be set to a value equal to or greater than the maximum value of the possible range of inclination angles when the vehicle drive device 100 is inclined. In this case, according to the same principle as the principle described above with reference to FIG. 6, oil can be guided to the back surface side (the axially first side A1) of the bearing 243 via the second guide surface 720 even when the vehicle is inclined in the front-rear direction. Therefore, in this case, of the oil that has reached the end of the second groove portion 72 on the radially outer side, the oil flowing radially inward along the second guide surface 720 (see an arrow R7 in FIG. 5), that is, the oil flowing to the back surface side of the bearing 243, can be efficiently increased.

In the present embodiment, as shown in FIGS. 4 and 5, the second groove portion 72 has a form in which the groove width (the distance between the second guide surface 720 and a surface facing the second guide surface) is substantially constant. However, the distance between the second guide surface 720 and a surface facing the second guide surface may be increased or decreased toward the radially inner side.

In the present embodiment, the second guide surface 720 of the second groove portion 72 may terminate on the radially inner side at substantially the same height position (position in the second direction Y) as the third axis C3. In this case, the first guide surface 710 can extend substantially entirely at a position higher than the third axis C3. As a result, oil can be efficiently supplied to a relatively wide range on the back surface side of the bearing 243 via the first guide surface 710 and the second guide surface 720.

The third groove portion 73 is formed on an axial end surface 253402 of the peripheral wall portion 25340 on the axially second side A2 in a manner recessed to the axially first side A1. Note that the depth (axial dimension) of the third groove portion 73 may correspond to the protrusion height of the peripheral wall portion 25340 (the axial protrusion height relative to the radially outer periphery).

The end of the third groove portion 73 on the radially inner side is connected to the end of the first groove portion 71 on the axially second side A2. In the present embodiment, as shown in FIGS. 4 and 5, the third groove portion 73 extends over a partial circumferential section above the third axis C3, and is connected to the first groove portion 71 at the lower circumferential end. Note that the depth (the dimension in the axial direction A) of the third groove portion 73 may be significantly shorter than the extending range of the first groove portion 71 in the axial direction A.

The third groove portion 73 has a function of guiding the oil flowing down from the upper side thereof by its own weight (see an arrow R25 on the left side of FIG. 2B) to the inlet of the first groove portion 71 (i.e., the end of the first groove portion 71 on the axially second side A2). Thus, of the oil flowing down from the upper side of the third groove portion 73 by its own weight, the oil flowing to the inlet of the first groove portion 71 (see an arrow R5 in FIG. 5) can be efficiently increased. As a result, the oil can be efficiently supplied to the back surface side of the bearing 243. Note that the third groove portion 73 may be positioned relative to the catch tank 920 so as to receive a relatively large amount of oil from the catch tank 920.

Here, in the present embodiment, the first groove portion 71 and the second groove portion 72 formed in the peripheral wall portion 25340 of the bearing support portion 2534 are formed to be offset in the circumferential direction relative to the third groove portion 73 similarly formed in the peripheral wall portion 25340. This is advantageous also from the viewpoint of the strength of the peripheral wall portion 25340 of the bearing support portion 2534, compared to when these three groove portions are formed in the same circumferential range.

In the present embodiment, the depth (radial dimension) of the first groove portion 71 is significantly smaller than the radial dimension of the peripheral wall portion 25340 of the bearing support portion 2534. This makes it easier to ensure the required strength of the peripheral wall portion 25340 of the bearing support portion 2534 than when the depth (radial dimension) of the first groove portion 71 is the same as the radial dimension of the peripheral wall portion 25340.

In the present embodiment, the depth (the dimension in the axial direction A) of the third groove portion 73 is significantly smaller than the dimension in the axial direction A of the peripheral wall portion 25340 of the bearing support portion 2534 (the dimension in axial direction A from the axial end surface 253402 to the outer periphery 253420 or the bottom wall portion 25342). The required strength of the peripheral wall portion 25340 of the bearing support portion 2534 is more easily ensured than when the depth (the dimension in the axial direction A) of the third groove portion 73 is the same as the dimension in the axial direction A of the peripheral wall portion 25340.

In this manner, according to the present embodiment, it is possible to reduce or eliminate a shortage in the amount of oil supply to the bearing 243, which may be caused by the vehicle orientation, while ensuring the required strength of the bearing support portion 2534.

Although each embodiment has been described in detail above, the present invention is not limited to a specific embodiment, and various modifications and changes can be made within the scope described in the claims. In addition, all or a plurality of the components of the embodiment described above can be combined.

For example, in the embodiment described above, the oil passage structure 70 is applied to the bearing support portion 2534 of the counter shaft 41, but may be applied to other bearing support portions.

### REFERENCE SIGNS LIST

100: Vehicle drive device, 1: Rotary electric machine (power source), 2: Case, 4: Counter gear mechanism (power transmission mechanism), 243: Bearing (shaft bearing), 2534: Bearing support portion (shaft bearing support portion), 25340: Peripheral wall portion (first wall portion), 253402: Axial end surface, 25342: Bottom wall portion (second wall portion), 253420: Outer periphery, 70: Oil passage structure, 71: First groove portion, 710: First guide surface, 72: Second groove portion, 720: Second guide surface, and 73: Third groove portion

## Claims

1. A vehicle drive device comprising:
a power transmission mechanism including a rotary shaft member that enables transmission of power from a power source to a wheel;
a shaft bearing that rotatably supports the rotary shaft member;
a case that houses the power transmission mechanism in a housing chamber in which oil flows, the case including a shaft bearing support portion that fixedly supports the shaft bearing; and
an oil passage structure, at least a part of which is formed in the case,
wherein
the shaft bearing support portion includes
a first wall portion formed about an axis and radially facing the shaft bearing, and
a second wall portion formed about the axis and axially facing an outer periphery of the shaft bearing from an axially first side,
the oil passage structure includes a first groove portion formed in the first wall portion in a manner recessed radially outward,
the first groove portion includes a first guide surface facing obliquely downward, and
the first guide surface extends axially and downward from an end of the first wall portion on an axially second side toward an end of the first wall portion on the axially first side.

2. The vehicle drive device according to claim 1, wherein
the oil passage structure includes a second groove portion that is formed in the second wall portion in a manner recessed toward the axially first side and is connected to an end of the first groove portion on the axially first side,
the second groove portion includes a second guide surface facing obliquely downward, and
the second guide surface extends radially and downward from an end of the second wall portion on a radially outer side toward an end of the second wall portion on a radially inner side.

3. The vehicle drive device according to claim 2, wherein the first guide surface is inclined relative to a vehicle left-right direction, and the second guide surface is inclined relative to a vehicle front-rear direction.

4. The vehicle drive device according to claim 1, wherein
the oil passage structure includes a third groove portion formed on an axial end surface of the first wall portion on the axially second side in a manner recessed to the axially first side, and
an end of the third groove portion on a radially inner side is connected to an end of the first groove portion on the axially second side.

5. The vehicle drive device according to claim 4, wherein a radial depth of the first groove portion is smaller than a radial thickness of the first wall portion.
